# EUROPEAN PATENT APPLICATION

(11) **EP 0 829 943 A1**
(43) Date of publication of application: **18.03.1998**
(21) Application number: 97306609.5
(22) Date of filing: 28.08.1997
(51) Int. Cl.: H02K 5/167, F16C 23/04

(54) **Electric motor and bearing therefor**

(30) Priority: 12.09.1996 US 712912
(71) Applicant: A.O. Smith Corporation, Milwaukee, Wisconsin 53223-0975 (US)
(72) Inventor: Page, Alan, Monticello, Indiana 47960 (US)
(74) Representative: Orchard, Oliver John

(57) **Abstract**

An electrical motor has bearing support structures which self adjust to axially align bearings. The bearings may tip -- but not rotate -- within supporting sockets so that the bearings may self align to accommodate a shaft passing through them. The bearings are somewhat barrel shaped to fit into somewhat spherical shaped sockets on bridges of plastics material. The bearings have longitudinal grooves and the sockets have tabs that fit into the grooves to restrain the bearing against rotation while allowing a tipping or rocking which produces the self alignment.

## Description

This invention relates to bearing brackets for fractional or sub-fractional horsepower motors. In a particular arrangement to be described below, by way of example in illustration of the invention, a bracket for use in such motors has self aligning floating bearings.

Fractional and sub-fractional horsepower motors are well known devices which find use in many environments ranging from mechanized games to sophisticated machines such as clocks, and laboratory instruments. One characteristic of such motors is that they have reached a stage of development where low cost production is essential. Therefore, almost any saving of production costs is a large step forward. Still, since these motors are often used in high quality structures, no reduction in cost can be tolerated if it results in a reduction of quality. Quite to the contrary, any change in production should lead to a higher quality motor.

One source of potential trouble in fractional horsepower motors relates to the alignment of a bearing which supports a rotating shaft. If the bearings are held rigidly, even the slightest misalignment causes severe wear upon a shaft, if not rendering an entire motor inoperative. Heretofore, fractional and sub-fractional horsepower motors have avoided these misalignment problems by using floating self aligning bearings. These floating bearings have required a number of parts, primarily springs, for holding a bearing in a socket while allowing it to rotate enough to align itself with a shaft. Therefore, even if the manufacturing tolerances accumulate into serious misalignment problems, by using floating bearings, the shaft bearing is free to align itself and to accommodate and overcome that which would otherwise be a defect.

Features of a particular arrangement illustrative of the invention to be described below by way of example and showing floating bearings for fractional and sub-fractional horsepower motors and the support therefore, are that the cost is reduced cost and that there is an improvement in the performance of such motors, which rely upon floating bearings.

In a particular arrangement to be described below by way of example in illustration of the invention, a moulded plastics bearing support has a socket containing a plurality of anti-rotation index tabs. The bearing itself is more or less barrel shaped with a central bore for receiving and supporting a motor shaft. The barrel shape is designed to fit rotatably into the socket, while being free to seek and maintain a position of the bore in alignment with the rotatable shaft. The barrel shape has external longitudinal recesses which receive and fit over the index tabs moulded into the socket. In this way, the barrel is free to tip as may be required in order to be aligned with a shaft, while being held against rotational forces which occur as a result of the rotation of the shaft.

The following description and drawings disclose a previously proposed arrangement, and, by means of an example, the invention which is characterised in the appended claims, whose terms determine the extent of the protection conferred hereby.

In the drawings:-
Fig. 1 is a perspective view of a fractional horsepower motor of a type which may use the inventive floating bearing support,
Fig. 1A is a side elevation of the motor of Fig. 1,
Fig. 1B is a cross section of a previously proposed floating bearing which might have been used on the motor of Figs. 1, 1A,
Fig. 2 is a plan view of a bearing support which may be used on the motor of Figs. 1, 1A,
Fig. 3 is a side elevation of the support of Fig. 2 and of a bearing therefor,
Fig. 3A is a cross section taken along line 3A-3A of Fig. 3,
Fig. 4 is a side elevation of the bearing,
Fig. 5 is a top plan view taken along lines 5-5 of Fig. 4,
Fig. 6 is a cross-section view of the bearing taken along line 6-6 of Fig. 4, and
Fig. 7 is a cross-section of a socket for receiving and supporting the bearing of Figs. 4-6.

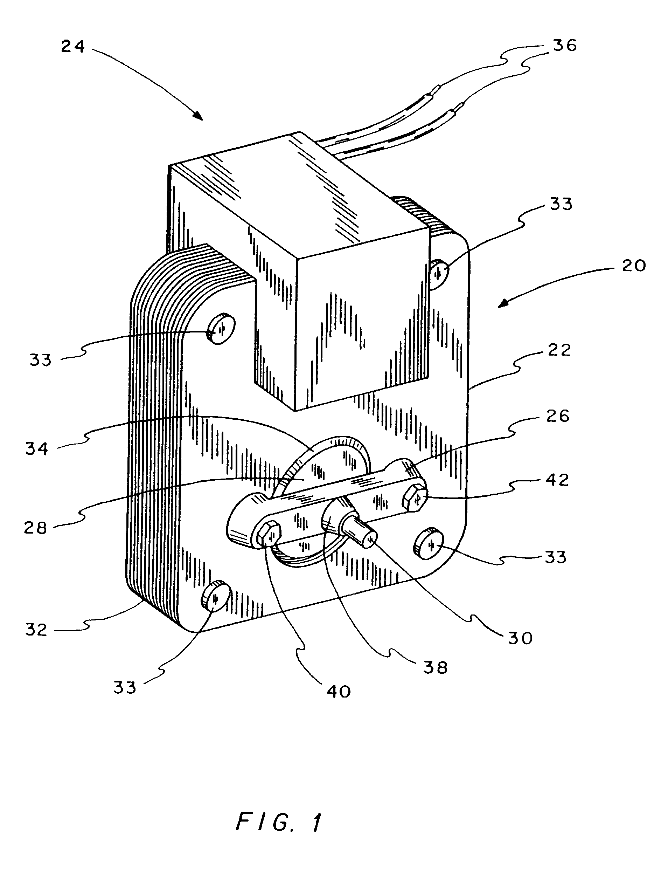

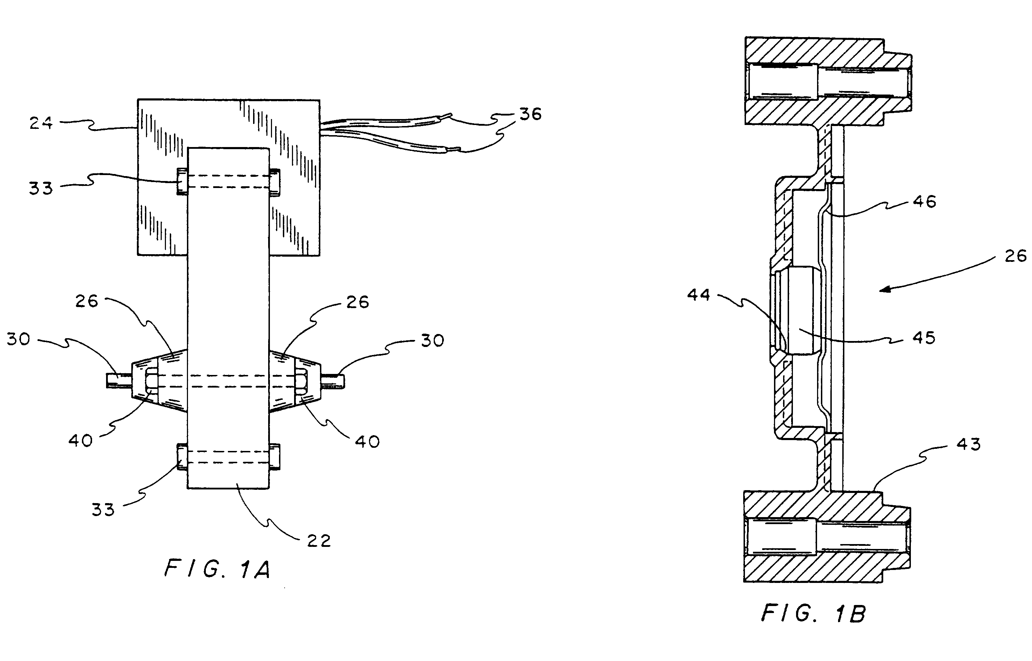

A fractional or sub-fractional horsepower motor 20 is shown in Fig. 1. The major components of the motor include a stator in the form of a laminated core 22, a coil 24, and a bearing bracket 26, and a rotor 28 mounted on a rotatable shaft 30 carried by a bearing 38 in the bracket. The laminations of the core 22 are secured together by rivets 33 and provide a window 34 for receiving the rotor 28. The coil 24 is connected to a suitable power source via wires 36.

Fig. 1A is a side elevation of the motor of Fig. 1 showing the bearing brackets or supports 26 on opposite sides of the laminated core structure 22. The rotor 28 is mounted on the shaft 30 which extends through and is supported by the bearings 38 on opposite sides of the motor. The invention is particularly concerned with the bearing 38 and the bearing bracket or support 26.

The laminations are metal parts formed by a punch press and, therefore, they are made with the accuracy of a die. The bearing brackets 26 are moulded and, therefore, they are made with the accuracy of a mould cavity. Accordingly, the dimensions of the piece parts are very accurate. Nevertheless, all parts have manufacturing tolerances. For example, the bearing brackets 26 are held in place by bolts 40, 42 which pass through a front bracket 26, holes through the core laminations, and a back bracket 26, as seen in Fig. 1A. This means that the holes must be large enough for the easy insertion of the bolts 40, 42. Likewise all of the other piece parts have similar tolerance variations. Most of these tolerance variations average out so that usually the bearings 38 are well aligned. However, sometimes the tolerances of all parts in a motor may not average out, so that the cumulative tolerance variations provide a substantial departure from the normal, with the result that the bearings 38 are misaligned.

Fig. 1B shows a previously proposed way of accommodating the bearings so that they may align themselves. Here the bearing support bracket 43 is usually a cast metal part, perhaps made of zinc or the like. The bracket 43 has a somewhat dish shaped seat 44 for supporting one side of a bearing 45. A spring 46 snaps over, captures, and supports the opposite side of the bearing 45, thereby leaving the bearing free to float so that it may move to align itself with the rotatable shaft 30 (Fig. 1). The previously proposed structure of Fig. 1B is more expensive than it need be, because of the cost of the separate spring 46, and because separate assembly steps are required. Also, as good as the bearing and support of Fig. 1B may be, it is considered that an improved performance can be obtained by means of a structure within the scope of the appended claims.

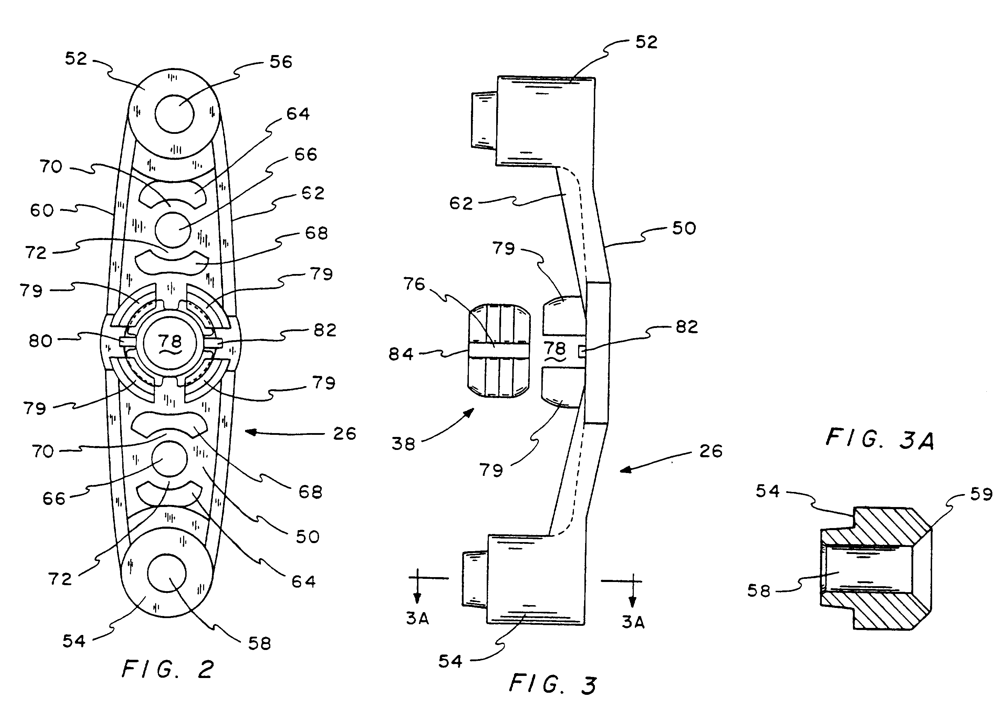

Within reason, arrangements within the scope of the appended claims provide means for accommodating any bearing misalignments that may occur without requiring separate parts; such as a spring, or a complicated assembly procedure. In greater detail, Figs. 2 and 3 show the preferred bearing bracket or support 26 as an elongated, preferably moulded bracket 26 of a plastics material. While different materials may be used to form the bracket 26, the preferred material is nylon 6/6, which is 30% glass filled. The structural shape of the preferred form of a bracket 26 is a bridge 50 supported at its opposite ends by posts 52, 54 which contain and define bolt holes 56, 58 for receiving bolts 40, 42 (Fig. 1). The cross section of the posts 52, 54 is shown in Fig. 3A. Preferably, there is a relatively sharp raised circular edge 59 surrounding the bolt hole 58 to reduce the friction which might occur against the bolt head at the time of the installation of the bearing bracket 26.

Side rails 60, 62 extend between the posts 52, 54 to give added vertical strength to the bridge 50. The underside of the bridge is designed to prevent problems which might otherwise occur when the plastics material is moulded. Those problems involve shrinkage, warpage, sunken areas, and the like. Also, it is desirable to reduce the consumption of the plastics material by blocking out any space in the mould where plastics material is not required in order that the moulded plastics material piece part may perform its functions adequately. Each end of the bridge part 50 has three open spaces 64, 66, 68 leaving two arches 70, 72. These open spaces serve the twin purposes of minimising sunken or shrinkage areas, and of saving plastics material.

At the centre of bridge 50, a socket 78, 79 is formed. Preferably, the circumference of the socket 78 is defined by four upstanding leaves 79 which produce a somewhat truncated generally spherical cavity that will surround and embrace a somewhat barrel shaped bearing 38. There are four open spaces 78 between the four leaves in order to make it possible for the bearing 38 to be installed and removed with ease, merely by inserting a pry.

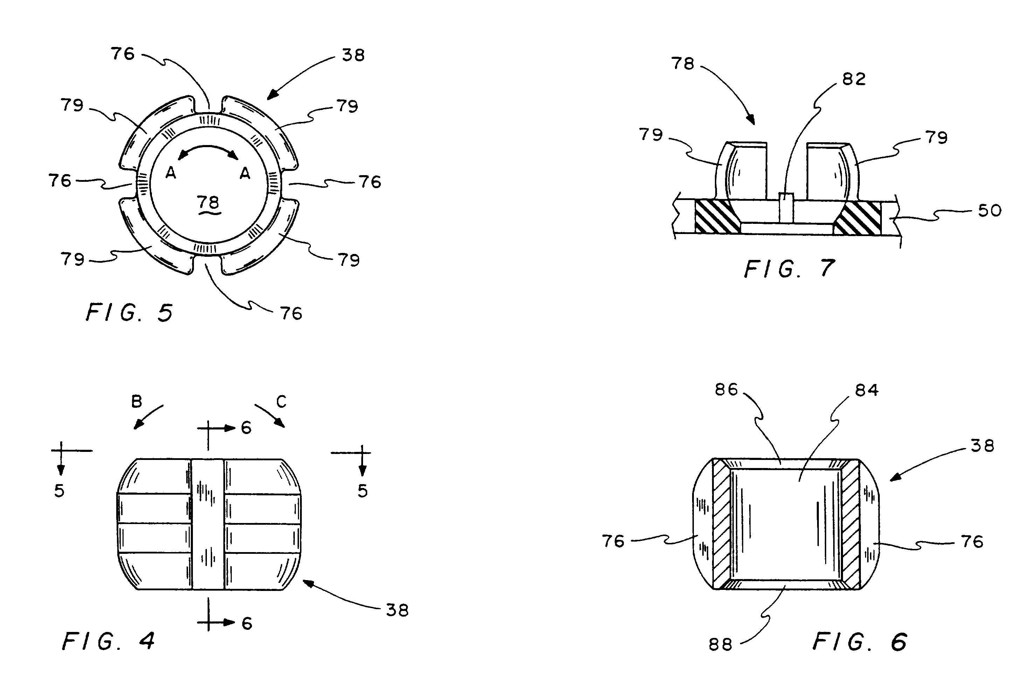

In each of two oppositely disposed spaces 78 between the socket leaves 79, a respective upstanding anti-rotation element or tab 80, 82 is formed. These tabs provide stops which restrict any rotation of the bearing 38 within the socket and about an axis extending through a bore 84 (Fig. 6) of the bearing 38.

The construction of the bearing 38 may be seen from Figs. 3, 4, 6. In greater detail, the bearing 38 is preferably made of a high graphite iron, from which all burrs have been removed, and which is free of nicks, or foreign particles. The upper and lower edges of the bore 84 are chamfered at 86, 88 (Fig. 6) to form a taper which facilitates the insertion of the shaft 30, and which reduces the wear of the shaft.

In greater detail, as best seen in Fig. 4, the external contour of the bearing 38 is somewhat barrel shaped. The plan view of the bearing is seen in Fig. 5 where four longitudinal spaces or grooves 76 are formed at equally spaced (90°) intervals around the periphery of the bearing 38. Each longitudinal space or groove 76 is wide enough easily to receive an anti-rotational tab 80, 82 in the socket 78, 79. These tabs restrict any rotation of the bearing 38, as shown by a double ended arrow A-A in Fig. 5, but they do not interfere with the bearing 38 rocking in the directions B, C (Fig. 4). Therefore, the bearing is stationary insofar as a rotating shaft is concerned. However, the bearing 38 is also free to tip or rock and align itself with the axis of the shaft 30, regardless of how badly (within reason) the shaft 30 may be axially misaligned.

It will be understood that, although particular arrangements have been described by way of example in illustration of the invention, variations and modifications thereof, as well as other embodiments may be made within the scope of the appended claims.

## Claims

1. A fractional horsepower motor (20) including a magnetic core structure (22) with a rotor (28) mounted on the structure (22), the rotor (28) having an axially rotatable shaft (30), a bearing bracket or support (26) having a socket (78) (79) and being mounted on the magnetic core structure (22), a bearing (38) mounted in the socket (78) (79) and carried by the bearing bracket (26) for supporting the shaft (30) the bearing (38) having a somewhat barrel shaped contour and having at least one longitudinal groove (76) on a periphery of the barrel shape, and at least one tab (80) (82)formed in the socket (78) (79) and fitting into the groove (76) for restraining the bearing (38) from rotation about an axis of the bearing (38) while enabling the bearing (38) to tip in the socket (78) (79) in order to compensate for any shaft/bearing misalignment.

2. A motor as claimed in claim 1 wherein the bearing bracket (26) is made of moulded glass filled nylon.

3. A motor as claimed in claim 2 wherein the bearing (38) is made of high graphite iron.

4. A motor as claimed in claim 1 wherein the socket (78) (79) has at least two upstanding leaves (79) with at least two oppositely disposed spaces (78) between the leaves (79), the tabs (80)(82) being formed in the spaces between the leaves (79).

5. A motor as claimed in claim 1 wherein the socket (78) (79) has at least four upstanding leaves (79) with longitudinal spaces (78) between the leaves (79), two oppositely disposed ones of the four spaces (78) containing the tabs (80) (82) for restraining the rotation of the bearing (38), a second two of the oppositely disposed spaces (78) providing openings for the installation of a pry and the removal of the bearing (38) from the socket (78) (79).

6. A self-aligning bearing structure for use in an electrical motor (20) having a stator (22,24,26) and a rotor (28), the bearing structure including a somewhat barrel shaped bearing (38) for rotatably supporting the rotor, at least two grooves or spaces (76) formed longitudinally on an outside surface of the somewhat barrel shaped bearing 38, an elongated bearing bracket (26) having a centrally located socket (78) (79) therein, the socket (78)(79) having upstanding leaves (79) defining a truncated generally spherical cavity for receiving the somewhat barrel shaped bearing (38), the leaves (79) being separate from each other to provide oppositely disposed grooves or spaces (78) between them, at least one pair of the oppositely disposed grooves or spaces (78) containing a protruding anti-rotational shaped element (80) (82) which cooperates with the grooves or spaces (76) on the outside surface of the somewhat barrel shape of the bearing 38, while enabling the somewhat barrel shaped bearing (38) to tip in the spherical socket (78) in order to align itself with the rotor (28).

7. A bearing structure as claimed in claim 6 wherein there are two brackets (26) for the motor (30), each of the brackets (26) being a glass filled nylon bridge structure (50) having a length which spans the rotor (28) and is adapted to be mounted at its opposite ends on each of the opposite sides of the stator (22,24,26) with the socket (78)(79) facing inwardly and opening towards and being aligned with the rotor (28), one of the somewhat barrel shaped bearings (38) being mounted in each of the sockets (78) (79), whereby the bearings (38) are free to tip into axial alignment responsive to the insertion of a shaft of the rotor (28) in the bearings (38).

8. A bearing support structure as claimed in claim 7 wherein each of the bearings (38) has an axial bore (84) with opposite edges of the bore being chamfered (86) (88).

9. A bearing structure as claimed in claim 7 wherein the adaptation for mounting at the opposite ends of the bridge (50) includes a respective bolt hole (56) (58) formed therein with a generally sharp raised circumferential edge (59) surrounding a respective bolt hole (56) (58) to provide minimum friction to the tightening of the bolts for mounting the brackets (26) on the stator (22,24,26).

10. A bearing structure as claimed in claim 6 wherein there are four of the upstanding leaves (79) forming the socket (78) (79) and there are four of the spaces (78) located at approximately 90° intervals around the circumference of the socket (78) (79) the anti-rotational shaped element including at least one tab (80) (82) formed in at least one of the spaces (78) which fits into the groove (76).

11. A fractional horsepower motor (20) having a pair of oppositely located bearing means (38), at least one of the bearing means (38) having a somewhat barrel shaped outside surface with at least one longitudinal groove (76) thereon, socket means (78)(79) for supporting at least one bearing means (38) and having means (80) (82) fitting into the groove (78) for enabling the bearing means (38) to tip or rock while restraining the bearing means (38) from rotating, whereby the bearing means (38) may self align to a misaligned bearing shaft, means (26) for mounting the socket means (78) (79) on a stator (22,24,26) of the motor (20) for receiving a rotor (28) of the motor (20), and a rotor (28) mounted in the pair of bearing means (38).

12. A motor as claimed in claim 11 wherein an outside surface of the bearing means (38) has at least two longitudinal grooves (76) thereon and the means fitting into the groove includes two protrusions (80) (82) in the socket (78) (79) for enabling the bearing means (38) to tip or rock while restraining it against rotation.
